# EUROPEAN PATENT SPECIFICATION

(11) **EP 1 885 941 B1**
(45) Date of publication and mention of the grant of the patent: **22.06.2016**
(21) Application number: 06733504.2
(22) Date of filing: 17.05.2006
(51) Int. Cl.: D21C 5/02

(54) **PROCESS FOR DEINKING RECYCLED FIBERS AND USE OF AN ACID IN DEINKING**
VERFAHREN ZUM DE-INKEN REZYKLIERTER FASERN UND VERWENDUNG EINER SÄURE BEIM DE-INKEN
PROCEDE DE DESENCRAGE DE FIBRES RECYCLEES ET UTILISATION D'UN ACIDE DE DESENCRAGE

(30) Priority: 18.05.2005 FI 20055234
(43) Date of publication of application: 13.02.2008
(73) Proprietor: Linde AG, 80331 München (DE)
(72) Inventor: LEINO, Hannu, FI-02230 Espoo (FI); LEINO, Ulrika, S-172 62 Sundbyberg (SE); RENNEL, Malena, S-138 34 Älta (SE); SEILO, Marika, FI-02650 Espoo (FI)
(86) International application number: PCT/SE2006/050135
(87) International publication number: WO 2006/123996

(56) References cited:
- EP-A1- 0 030 057
- EP-A1- 0 615 020
- EP-A1- 0 737 774
- EP-A2- 0 231 762
- WO-A2-2004/048680
- WO-A2-2004/048680
- FR-A1- 2 775 301
- US-A- 4 243 478
- US-A- 6 019 873
- US-A- 6 063 237
- US-B1- 6 251 220
- US-B1- 6 387 212

## Description

The present invention relates to a process for deinking recycled fibers. The present invention also relates to the use of an acid for dissolving calcium carbonate in the deinking of recycled fibers.

### Background

Paper industry is using increasing amounts of waste paper ("recovered paper") products for providing recycled fibers for the production of new paper ("recycled paper"). Part of the recovered paper is printed and in order to be able to prepare good quality products from recovered paper, printing ink needs to be removed thoroughly from the paper before it is made into paper making pulp. Even small amounts of remaining printing ink harms the process, since large ink particles remaining in the pulp cause visible black or coloured spots in the paper, whereas small ink particles lower the brightness of the paper and increase the need for bleaching.

Deinking of the paper is performed in deinking plants which comprise several different unit operations depending on the construction of the plant as well as on the type and quality of the recovered paper used. Paper industry is increasingly using closed water systems, and in order to decrease the amount of fresh water needed, the water circulation in deinking plants is usually divided into two separate loops, and water is circulated in each loop upstream back into the deinking process.

When recovered paper is converted into paper making pulp, the recovered paper is first broken down into individual fibers in a disintegrating process which is performed at high pH, typically provided by sodium hydroxide. Then the contaminants, such as paper clips and foils, are separated from the fibers e.g. by screening and/or flotation. The fibers are usually dewatered after this unit operation(s) and water is separated from the fibers and supplied back upstream of the process.

After dewatering it is still necessary to treat the fibers in another loop in order to remove also the smallest ink particles. The contaminants in the suspension which are not removed in the first loop, such as small ink particles, can be removed by washing and/or flotation. Flotation is the most common method used for removing the rest of the printing ink from recycled fibers. Most of the printing inks used are hydrophobic and this feature is used to help the removal of the ink. In the flotation air or some other gas is injected into the suspension and bubbles are formed in the suspension. Hydrophobic particles attach to the bubbles whereas hydrophilic particles remain in the suspension. The bubbles move to the surface of the suspension forming a foam layer which is easy to remove. Particles which are not hydrophobic initially can be made hydrophobic by adding suitable surfactants into the suspension.

After flotation the suspension is dewatered and washed before it is supplied further to the paper making process. Sometimes it is still necessary to bleach the recycled pulp before it is supplied to the paper machine.

European patent application EP 0 030 057 discloses a method of deinking paper pulp using a phosphate ester of a monohydric alcohol with 8-22 carbon atoms, or a mixture of such esters, as a collector during flotation. The document teaches that it is important for good results in the flotation, as it is when known collectors are used, that the water to be used is of sufficient hardness. The hardness can be increased by addition of e.g. calcium chloride.

EP 0 657 578 discloses a process for treating recovered paper for paper manufacture in which in a first stage recovered paper is repulped accompanied by the addition of deinking chemicals and the printing ink is dissolved and dispersed, and in a second stage the printing ink particles are removed from the waste paper stock suspension by flotation. The repulping and flotation are performed in the neutral range with a pH-value between 6.5 and 8.8 without using fatty acids or soaps, preferably also without using hydrogen peroxide and alkaline salts and solutions. Repulping takes place in a pulper or a repulping drum in the high consistency range with a true density higher than 10 % and the deinking chemicals comprise nonionic surfactants. The process is not dependent on the calcium ion content in the process.

DE 196 31 150 discloses a process for deinking cellulose containing printing material wherein the printing material is treated with sodium hydroxide, hydrogen peroxide, a surfactant and optionally water glass and the detached printing ink is separated by flotation. The surfactant used is an amphiphilic cationic surfactant, and the amount of sodium hydroxide is selected so that the pH of the aqueous suspension does not exceed the value 9 and the amount of water glass is about 0 to 0.5 % by weight. The patent mentions that at pH values below 9 the anionic tensides react with calcium ions in the process forming insoluble calcium soaps.

US 6,426,200 and US 2002/0142452 disclose a method for deinking toner from noncontact and mixtures of noncontact and contact-printed recovered paper. The method comprises the steps of pulping the recovered paper to produce a pulp slurry; adjusting the pH of said pulp slurry to between about 4 and about 6; adding a surfactant to the pulp slurry; adding a cation to the pulp slurry, adding deinking enzymes to said pulp slurry; continuing pulping for at least 10 minutes to produce a treated pulp slurry comprising toner particles and pulp; terminating the activity of said deinking enzymes; and separating the toner particles from the pulp. The cation is selected from the group consisting of calcium, magnesium, manganese, sodium and lithium

US 6,159,381 provides a process for the treatment of a suspended solids containing aqueous effluent or reject derived from a plant for the treatment of recovered paper by deinking which allows the fines contained in the effluent or reject to be recovered in a form in which such fines can be reused in a paper making process. A source of alkaline earth metal ions and a source of carbonate ions are added into the aqueous suspension to form therein a composite particulate material. The source of alkaline earth metal ions is preferably calcium hydroxide.

US 6,387,212 B1 relates to a process for obtaining fibers integral with calcium carbonate particles, in which the fibers to be treated are contacted with carbon dioxide generator means and at least one composition comprising Ca⁺⁺ ions capable of reacting with the carbon dioxide so as to give "in fine" a precipitation of calcium carbonate "in situ" on the fibers. Preferably, the carbon dioxide generator used is calcium bicarbonate.

WO/048680 A2 relates to a 2-stage flotation method. An alkaline flotation step is immediately followed by a flotation step in the neutral to weakly acid pH range, the pH value being lowered at the beginning of the second flotation step to a pH value in the range of from 5 to 7.5 using carbon dioxide.

US 4,243478 relates to a process for treating waste paper with hardened water. For maintaining the hardness of the water, the re-cycled water is hardened by dissolving calcium carbonate and carbon dioxide in it, thereby forming calcium by carbonate.

The material supplied into a deinking plant differs considerably depending on the type and quality of the recovered paper. This leads often to problems in the process since it is difficult to keep the conditions stable. Because of the varying material used, the pH and hardness in the flotation varies, which leads to instable conditions in the flotation and poor flotation results. Improper flotation causes poor quality of the pulp and paper subsequently produced.

The prior art has observed that calcium ions improve the flotation and hence, it has been suggested that soluble calcium compounds such as calcium chloride or calcium hydroxide be added to provide calcium ions for the flotation. However, the addition of calcium compounds cannot easily be varied in accordance with the variations in the incoming pulp material. Furthermore, calcium chloride provides chloride ions in the system. These have a detrimental effect on the equipment because of their corroding nature. Calcium hydroxide has a low solubility compared to sodium hydroxide and it is difficult to provide sufficiently calcium ions in this way. There may also be undissolved calcium hydroxide particles left in the process which may be harmful later in the process.

A typical way of providing sufficient calcium for the flotation has been to add calcium hydroxide into the disintegration of recovered paper to partly replace sodium hydroxide. However, calcium hydroxide added at this point suffers from the same drawbacks as mentioned above. Thus there is a need for a simple method to stabilize the variations in the deinking process caused by differing incoming material.

### Summary of the invention

The present invention provides a process for improving the deinking of recycled fibers. According to the invention at least a substantial part of the calcium ions required for good flotation performance are obtained from calcium carbonate in the process system.

The process according to the present invention comprises providing an aqueous pulp suspension containing recycled fibers, printing ink and calcium carbonate; stabilizing the hardness of said pulp suspension by causing dissolution of calcium carbonate contained in said suspension or in an aqueous fluid added to said suspension; and subjecting the resulting pulp suspension to flotation to separate said printing ink from said suspension.

In the present invention an increased calcium ion amount and an increased hardness is provided by an acid in the process. In the typical prior art processes a basic compound, i.e. calcium hydroxide has been added to provide calcium ions in the process. In a preferred embodiment of the present invention solid calcium carbonate is caused to dissolve by providing a weak acid in said suspension. The weak acid is preferably carbonic acid which is generated by introducing carbon dioxide into said suspension or into said aqueous fluid for forming carbonic acid therein.

The present invention provides a way to improve the flotation by stabilizing pH and hardness and thus reducing fluctuations in the flotation. The present invention also provides a way to provide a desired level of pH and/or hardness for said flotation.

The stabilized hardness has, however, also been found to have a beneficial effect on other flotations and flotation agents even if there is no direct saponification involved. Some of the surfactants used in flotation need calcium in order to function properly, and for such surfactants the effect of the invention is significant and clearest.

The present invention also provides a novel use of an acid which comprises dissolving calcium carbonate and stabilizing the hardness in a flotation process for the deinking of an aqueous pulp suspension containing recycled fibers, printing ink and calcium carbonate. The acid is preferably a weak acid which is preferably generated by carbon dioxide.

### Detailed description of the invention

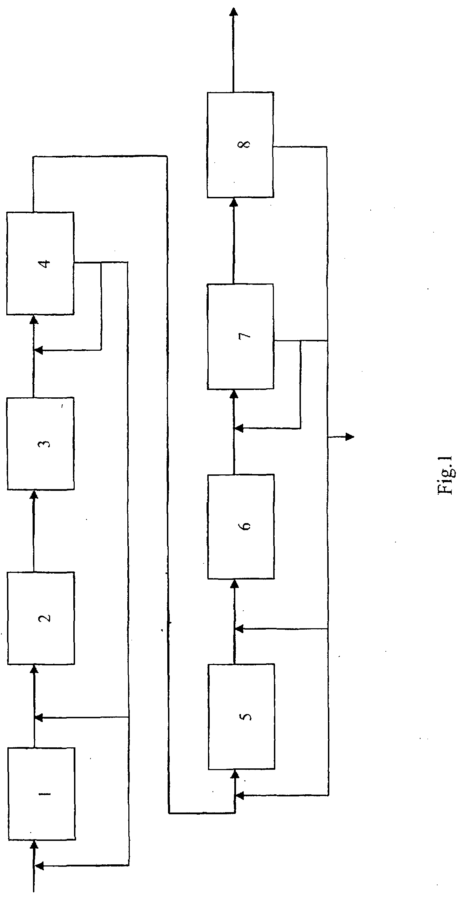

The invention will now be described in greater detail with reference to the drawing, wherein Figure 1 discloses a flow chart of a deinking plant.

The flow chart is explained in more detail in Example 1.

The terms used in the specification have the meaning usually used in the field. In the following some more specific definitions are given for some of the terms used in the specification and claims.

As used herein, the term "recovered paper" means used waste paper which has been collected to be reused in the production of paper. The recovered paper typically contains printing ink and fillers such as calcium carbonate and calcium sulfate in addition to a large variety of chemicals used in the production of the initial paper.

The term "recycled fibers" means paper making fibers which have been prepared from recovered paper. Some of the printing ink and calcium carbonate may still adhere to the fibers.

"Deinked pulp" comprises recycled fiber treated in a deinking process with removal of a large proportion of inks and some other contaminants (specks). Recycled fibers can be mechanical (wood-containing DIP) or chemical fibers (wood-free DIP) depending on the recovered paper grade and its composition by paper grades. Recycled fibers are used in the production of recycled paper and board products. See also Papermaking Science and Technology: Book 7, Recycled Fiber and Deinking edited by L. Göttsching and H. Pakarinen, 2000.

The term "printing ink" as used in the present specification and claims means all kinds of black and coloured printing colours which are used in conventional lithographic (offset), relief (letterpress and flexographic), rotogravure printing processes or any other printing process.

The term "hardness" refers to the hardness caused by calcium and/or magnesium ions in water or an aqueous solution. The ions may originate from fresh water used in the process, or from different chemicals added into the process, or from paper or wood raw material used in the process. Hardness can be measured in different ways. The abbreviation "°dH" stands for "deutsche Härte" (German hardness). The hardness value 1 °dH corresponds to about 0.18 mmol/l calcium and/or magnesium ions in a solutions.

In the present invention most of the calcium derives from the recovered paper. The hardness level is increased and/or stabilized by causing dissolution of calcium carbonate.

By providing the required calcium from the suspension itself there is no need to add any further chemicals into the process. Adding such chemicals in correct amounts is difficult and the chemicals may even be detrimental to the equipment used. The dissolution of the calcium carbonate provides a way to stabilize the hardness of the flotation to a desired and sufficiently high level. The stabilization of the hardness in the present invention specifically includes increasing the amount of calcium ions by the dissolution of solid calcium carbonate.

Usually the recovered paper contains sufficient calcium carbonate for the purpose of the invention, but in case the amount of calcium carbonate is low, it is possible to add calcium carbonate into the process. It is also possible to add the acid used in connection with calcium carbonate addition.

The recovered paper may also contain calcium sulfate as a filler and hence as a source of calcium ions. However, it should be noted that the dissolution of calcium sulfate is not pH dependent and providing an acid in the suspension does not directly affect the solubility of this filler.

In the preferred embodiment of the invention the dissolution of calcium carbonate provides a sufficient and stable source of calcium ions for the proper functioning of the process and there is no need for adding any calcium hydroxide to the system. However, in some situations it may still be preferred to add some calcium hydroxide to the system. In such a case, the calcium carbonate will only partly replace the source of calcium but the controlled dissolution will still provide the desired stability which is a characteristic of the present invention.

In the present invention the dissolution of calcium carbonate is provided by an acid in the pulp suspension. The use of a weak acid enables a more controlled way to cause the dissolution than addition of a strong acid. In a preferred embodiment of the present invention solid calcium carbonate is caused to dissolve by providing a weak acid in said suspension. A weak acid does not change the conditions in the process too quickly or locally, and hence it is easier to control than if strong acids were used. A weak acid of the present invention is any weak acid which is suitable to be used in a deinking plant. The weak acid is preferably selected from the following: carbonic acid, phosphoric acid, phosphorous acid, metaphosphoric acid, acetic acid, citric acid, formic acid and dissociated forms of these acids.

The weak acid used in the present invention is preferably added in an amount sufficient to reduce the pH of the suspension or aqueous fluid. In a preferred embodiment of the present invention the weak acid is provided in an amount which is sufficient to cause the pH of said suspension or said aqueous fluid after said provision of said weak acid to be about pH 6 to 8, preferably about pH 6.9 to 7.5. The pH should not be lowered much below pH 6 and a pH of about 5, for instance, should be avoided since it negatively affects the mechanical properties of the paper in addition to dissolving too much calcium carbonate.

The pH decrease provided in accordance with the invention depends on the initial pH of the incoming pulp suspension. The pH decrease is preferably at least 0.1 pH unit, more preferably 0.2 pH units or more. The pH is selected so as to cause a controlled dissolution of calcium carbonate contained in the process and thus to provide the calcium ions required for good flotation performance. The dissolution of the calcium carbonate ensures that the calcium ion level does not fall to levels, which are too low for the flotation. Thus the dissolution stabilizes the hardness without a need for additional calcium from outside the process, as in the prior art. Other calcium compounds such as calcium hydroxide may still be added to the system, if desired.

The dissolution of calcium carbonate according to the invention may be monitored by measuring the calcium ion concentration, by monitoring the hardness of the suspension, by monitoring the pH or by monitoring the amount of weak acid added or generated. In a preferred embodiment of the invention, the flotation is monitored by measuring the pH of the suspension.

In one aspect of the present invention the weak acid used is capable of forming a buffer in said suspension. The buffering effect of a weak acid is typically based on its ability to exist in both acidic and basic form due to the dissociation of the hydrogen ion. In addition to dissolving calcium carbonate, the buffer formed stabilizes the flotation by stabilizing the pH and reducing hardness fluctuation which is caused by variations in the incoming fiber material. The pH and hardness are preferably stabilized to a desired level for said flotation. The desired level of pH and hardness depend on the process in question, how the plant is constructed and what kind of material is supplied into the process. The amount of the weak acid is selected such that it provides a buffer stabilizing the suspension at a desired pH level for said flotation.

Because of the buffering effect of the preferred weak acid the pH of the process is stabilized so as to provide a pH fluctuation in said flotation of no more than ± 0.15 pH units, preferably no more than ± 0.05 pH units. Due to the stabilized pH the variation in the incoming recovered material does not cause problems in the process, and the process runs smoothly.

In a preferred embodiment of the present invention a hardness between 7 and 70 °dH, preferably between 9 and 15 °dH is provided in said suspension. Preferably the hardness is stabilized so as to provide a hardness fluctuation in said flotation of no more than ± 1 °dH units, preferably no more than ±0.5 °dH unit.

The acid used in the present invention can be added as such to the process and its amount is defined by a pH measurement. A weak acid can also be generated by introducing carbon dioxide into said suspension or said aqueous fluid for forming carbonic acid therein. Carbon dioxide is a gas, which dissolves in water or a pulp suspension forming carbonic acid and/or bicarbonate ions according to the reaction: CO₂ + H₂O <-> H₂CO₃ <-> H⁺ + HCO₃⁻. HCO₃⁻ ions have a buffering effect in a solution. At a high pH, especially greater than 10, the predominant reaction is CO₂ + 2 OH⁻ <-> CO₃²⁻ + H₂O. According to literature (D. Eklund, T. Lindström, Paper Chemistry - an introduction, DT Paper Science Publications, Grankulla, Finland 1991, p. 253) an increase in the carbon dioxide partial pressure increases the solubility of calcium carbonate. This can be presented with the following equation: CaCO₃ + CO₂ + H₂O <-> Ca(HCO₃)₂.

The carbon dioxide may be added in the form of pure carbon dioxide gas or as a mixture of carbon dioxide and other gases. It is, for instance, possible to use flue gases containing carbon dioxide.

A buffering effect is also provided by phosphoric acid since it converts reasonably quickly into dihydrogen phosphate, or H₂PO₄⁻. This dihydrogen phosphate is a good buffer, since it can either take a hydrogen ion and reform phosphoric acid, or it can give off another hydrogen ion and become monohydrogen phosphate, or HPO₄²⁻.

The weak acid may be added to or be generated in the pulp suspension in the flotation cell, or it may be added to or generated in the suspension before or after the flotation. In one aspect of the present invention the weak acid is initially provided in an aqueous fluid, which is subsequently added to said suspension. Such an aqueous fluid is for example circulated water which is used for dilution of the suspension.

The amount of weak acid used in the present invention depends on the process in question. The amount of acid provided should be sufficient to provide a desired dissolution of calcium carbonate. A skilled person is able to define the appropriate amount by simple trials, e.g. by analyzing the pH and/or hardness obtained by a certain amount of weak acid. In a preferred embodiment of the present invention the weak acid is generated by carbon dioxide and the amount of carbon dioxide supplied into the process is 0.5 to 10 kg/ton dry deinked fiber, preferably 1 to 5 kg/ton dry deinked fiber. In a preferred embodiment of the present invention carbon dioxide is introduced into said suspension during said flotation.

In one aspect of the present invention a saponifiable flotation agent is provided in said suspension for said flotation. In a preferred embodiment enough calcium carbonate is caused to dissolve to provide an amount of calcium ions which is sufficient to saponify at least part of said flotation agent.

A saponifiable flotation agent is a chemical which is added into the flotation in order to improve the removal of the ink particles. A flotation agent collects ink into greater particles and gives the agglomerates a hydrophobic surface. The flotation agent attaches also to air bubbles so it stays with the foam formed. Different types of flotation agents are e.g. fatty acids, semisynthetic and synthetic collectors. A wide variety of flotation agents are commercially available. Saponifiable flotation agents are those which are capable of forming soaps with the calcium. The soaps are compounds that contain both hydrophilic and hydrophobic portions and they concentrate at the boundary surfaces of water.

A certain minimum hardness is required in flotation in order for the soap to function well. In the prior art processes it has been suggested to increase the hardness by adding calcium as calcium hydroxide or as calcium chloride if the hardness has not been sufficiently high. It has been suggested that calcium soap formation improves flotation since sodium soap in the process reacts with calcium forming insoluble calcium soaps. The calcium soap precipitates on the ink surfaces making the surfaces more hydrophobic. The ink particles are then agglomerated into larger floating particles.

Calcium carbonate CaCO₃ is commonly used in paper making as a filler or pigment because it has a high brightness. It is also very white and can be purchased at reasonable prices. The calcium carbonate may be naturally occurring chalk or calcite or it may be synthetically produced precipitated calcium carbonate (PCC). It is well known in the art that the calcium carbonate dissolves in acids and the more acid is present the better the dissolution is. Calcium carbonate is sparingly soluble in alkaline conditions above a pH of about 8, but it is attacked by acids such as sulfuric acid and alum, as a result of which it is solubilized.

The use of carbon dioxide to create carbonic acid provides less calcium ions than a similar pH reduction using another acid. This effect of carbon dioxide makes it possible to use calcium carbonate as a filler in a paper making process below pH 8 as described in EP 0981665 and EP 0986671. In case the pH of a suspension containing calcium carbonate is lowered only slightly using carbon dioxide, the dissolution of calcium carbonate may even be reduced although the pH is lowered, but in the present invention the addition of carbon dioxide for the flotation is sufficiently big to cause dissolution of calcium carbonate.

According to the invention calcium carbonate is caused to dissolve in the pulp suspension which is subjected to flotation or in an aqueous fluid added to the suspension. This aqueous fluid is a fluid which is used in the deinking plant. Usually it is circulated water which contains material deriving from the recovered paper and chemicals added into the process. The more closed the water system of the deinking process is, the more water is circulated back upstream in the process. Usually a deinking plant comprises two separate water loops but it is possible to use one single loop or more than two loops if desired. The weak acid may be added to one loop or to all loops. However, it is preferred to add it to the last loop since the pH is typically higher in the earlier loop(s) and because the later loops are designed to provide a cleaner product.

The weak acid may be added in separate portions and to separate points of addition. In the preferred embodiment the acid is added in the second loop of a flotation system, but it may also for various reasons be added also to the first loop or only to the first loop.

In case the deinking process in question comprises more than one loop, the weak acid or carbon dioxide is typically introduced into a loop downstream of the first loop of said process or provided in an aqueous fluid, which is added to said loop downstream of the first loop. Even if the acid is provided in the second loop, the effect of the acid may be noted as a hardness increase in the first loop because of the circulation of waters.

In case the mill is adding calcium hydroxide to the disintegrating pulper in order to provide sufficient calcium for the first and/or second loop, the feeding of calcium hydroxide may be stopped or at least significantly reduced when the weak acid of the present invention is provided in the suspension.

In one embodiment of the present invention the weak acid used is provided in a pulp or into an aqueous fluid upstream of the flotation. It is also possible to perform the present invention in such a way that the weak acid is provided in the pulp or in a washing or dilution liquid used for the pulp downstream of said flotation, and an aqueous fluid derived from said washing or dilution liquid or from said pulp is fed upstream to said pulp suspension for said flotation.

In another aspect of the present invention a weak acid is generated by introducing carbon dioxide into said pulp or said washing or dilution liquid. When carbon dioxide is supplied in that way it can be introduced in an amount which is also effective in improving the washing, dewatering and/or filtration of said pulp. The exact amount needed depends on the process and a skilled person is able to define the appropriate amount with some tests.

A washing or dilution liquid as used herein designates a liquid such as water which is used to wash or dilute the pulp. Said liquid usually comprises circulated water which is used in preference of fresh water.

In yet another aspect of the invention said carbon dioxide is introduced into a filtrate, such as a filtrate from a disc filter, drum filter, screw or press or the like dewatering device.

Deinked pulp which has been subjected to flotation according to the present invention is preferably processed into paper or board in a conventional manner. The dissolution of calcium carbonate in the flotation stage in accordance with the present invention will provide a cleaner fiber and thus reduces the need for bleaching of the fibers. The improved flotation also gives a cleaner system which improves the overall paper making. The addition of carbon dioxide in accordance with the invention may also have a beneficial effect on the stability of the later process steps of the paper production. However, the main operation of the production of paper or board does not change in any significant amount because of the present invention and the person skilled in the art is therefore well able to process the deinked pulp produced by the inventive flotation into a product in the conventional manner.

The present invention also provides use of a weak acid for dissolving calcium carbonate from recycled fibers and for stabilizing the hardness in a flotation process for the deinking of an aqueous pulp suspension containing said recycled fibers and printing ink. Said weak acid is preferably generated by carbon dioxide and the invention thus provides a novel use of carbon dioxide.

In the following the present invention will be illustrated by some examples which describe some embodiments of the invention. The Examples are not intended to restrict the scope of the invention. It is evident to a person skilled in the art that the invention can be carried out in a great variety of ways.

### Example 1

### Reference example

Waste paper including a varying amount of newspaper and office waste paper was processed in a deinking plant of a paper mill. The paper was treated with sodium hydroxide in a disintegrating pulper to provide a pulp suspension with recycled fibers containing printing ink and calcium carbonate. The pulp suspension was processed in a deinking plant comprising two essentially separate water loops. (Figure 1.) The first loop of the process included a pulper 1 for disintegrating the paper, a separation unit 2, a flotation cell 3 and a washing unit 4. The second loop of the deinking process comprised a screening unit 5, a flotation cell 6, a disc filter 7 and a pressing unit 8. The water from the screening and washing stages was fed counter currently, i.e. upstream in the process and was used to wash and dilute the pulp suspension at various positions as shown in Figure 1.

The deinked pulp obtained from the second loop of the process was fed to the paper machine storage tower and was used to produce paper in a conventional manner. Some water was also fed from the paper machine long circulation into the disc filter of the second loop.

A flotation agent capable of forming soaps with calcium ions was added to the suspension just before the second flotation cell 6 to improve the flotation in the second loop. The pH and hardness in the flotation process varied and it could change very rapidly depending on the incoming material. Consequently, the flotation was instable and did not work well. The average pH of the suspension in the flotation process was 7.5 and the fluctuation was ± 0.2 pH units and sometimes even higher. Thus, the pH typically varied between about 7.3 and 7.7. Similarly, the hardness of the suspension in the flotation process varied between 6 and 10 °dH. At a hardness value of about 10 °dH the process worked fairly well, but at hardness 6 °dH there were problems in the flotation and the deinked pulp had black spots and poor brightness.

### Example 2

### Addition of carbon dioxide into the pulp stream

The effect of a weak acid according to the present invention was tested in the deinking process described in reference example 1. Solid calcium carbonate entering the process with the recycled fibers was dissolved by generating carbonic acid in the aqueous vehicle of the pulp suspension. The dissolution of the calcium carbonate increased the amount of calcium ions circulating in the second water loop of the deinking process. As a consequence of the carbonic acid and the buffering capacity of the resulting bicarbonate ions, the pH of the suspension in the flotation was reduced and stabilized.

Carbon dioxide was added into the pulp flowing to the second flotation cell 6, i.e. the flotation in the second loop. Two different levels of carbon dioxide were tested:
a) The amount of carbon dioxide added into the process was 1.3 kg/ton dry deinked pulp. After the carbon dioxide addition had started, the pH of the pulp suspension in the flotation was stabilized despite continued variations in the incoming recycled fibers. The average pH was decreased to about 7.3, and the fluctuation of the pH was reduced to about ± 0.05 pH units. The stable pH conditions gave a more stable flotation and the deinking result was significantly improved as compared to a process run without carbon dioxide. Due to the added carbon dioxide, the hardness of the pulp suspension increased and the fluctuation of the hardness decreased significantly. The lowest °dH value increased by 3 °dH units to 9 °dH and the fluctuation decreased so that it was no more than ± 1 °dH.
b) In the second test run performed, the amount of carbon dioxide added was raised to 1.5 kg/ton dry deinked pulp. The lowest hardness in the process increased from 6 °dH to 10 °dH and the variation was no more than ± 1 °dH. The pH was stable at a value of 7.1 with a variation of about ± 0.05 pH units after the addition of carbon dioxide had started. The flotation process was stable and worked well after the carbon dioxide addition.
c) The same process was also tested with a carbon dioxide addition of 2.0 kg/ton dry deinked pulp. After the carbon dioxide addition had started, the lowest hardness level of the pulp suspension increased to 12 °dH and the variation thereof was ± 1 °dH. The pH was stable at a level of 6.9 with a variation of about ± 0.05 pH units. The flotation was stable but the hardness was seen to be slightly too high, which resulted in no further improvement compared to test b).

### Example 3

### Addition of carbon dioxide to an aqueous fluid

The effect of carbon dioxide on the flotation described in Reference example 1 was also tested by adding carbon dioxide to the filtrate from the disc filter 7. The filtrate was partly circulated back to the disc filter and partly circulated upstream to dilute the pulp suspension flowing to the second flotation cell 6.

The carbon dioxide added to the circulating liquid generated carbonic acid which dissolved calcium carbonate entrained in the liquid. The resulting calcium ions entered the pulp suspension with the circulating liquid and increased the hardness of the pulp suspension in the flotation process in the same way as in Example 2. The generated carbonic acid and bicarbonate ions provided a buffering action which stabilized the pH of the flotation. The same amount of carbon dioxide as in Example 2 was required to provide the same effect as that described in Example 2.

The carbon dioxide added to the disc filter at the same time improved the performance of the disc filter and the overall deinking process was therefore significantly improved. The concentration of the pulp coming from the disc filter increased by about 1 percentage unit, i.e. the capacity increase of the filter was about 10 %.

The present invention has been described in detail by reference to carbon dioxide and carbonic acid for dissolving calcium carbonate for the flotation. However, it is obvious to the person skilled in the art based on the specification that other acids and especially buffering weak acids provide a similar stabilizing effect. Thus, the person skilled in the art is able to adopt the described flotation processes for the use of other means of causing controlled dissolution of calcium carbonate as defined in the claims.

## Claims

1. A process for deinking recycled fibers comprising
- providing an aqueous pulp suspension containing recycled fibers, printing ink and calcium carbonate;
- stabilizing the hardness of said pulp suspension by causing dissolution of calcium carbonate contained in said suspension by providing a weak acid in said suspension;
- subjecting the resulting pulp suspension to flotation to separate said printing ink from said suspension;
- wherein said weak acid is provided in an amount sufficient to cause the pH and hardness to be stabilized at a desired level for said flotation
- wherein said weak acid is provided in an amount sufficient to cause the pH of said suspension after said provision of said weak acid to be about pH 6 to 8, preferably about pH 6.9 to 7.5;
- wherein said pH is stabilized so as to provide a pH fluctuation in said flotation of no more than ±0.15 pH units, preferably no more than ± 0.05 pH units;
- wherein said hardness is stabilized so as to provide a hardness fluctuation in said flotation of no more than ± 1 °dH units, preferably no more than ±0.5 °dH unit.

2. A process according to claim 1, wherein said weak acid is selected from carbonic acid, phosphoric acid, phosphorous acid, metaphosphoric acid, acetic acid, citric acid, formic acid and dissociated forms of these acids.

3. A process according to claim 1, wherein said weak acid is provided by adding a weak acid into said pulp suspension.

4. A process according to claim 1 or 2, wherein said weak acid is generated by introducing carbon dioxide into said suspension for forming carbonic acid therein.

5. A process according to claim 1, wherein said weak acid is initially provided in an aqueous fluid, which is subsequently added to said suspension.

6. A process according to claim 1 or 2, wherein said weak acid is provided in an amount sufficient to reduce the pH of said pulp suspension.

7. A process according to claim 6, wherein the pH of said suspension is reduced by at least 0.1 pH unit, preferably 0.2 pH units or more by said weak acid.

8. A process according to claim 1, wherein said weak acid is capable of forming a buffer in said suspension.

9. A process according to claim 8, wherein said weak acid is provided in an amount which is sufficient to provide a buffer stabilizing the suspension at a desired pH level for said flotation.

10. A process according to claim 1 or 2, wherein said weak acid is provided in an amount sufficient to cause the hardness to be increased by an increased amount of calcium ions in said pulp suspension.

11. A process according to claim 1 or 2, wherein said weak acid is provided in an amount sufficient to cause the hardness to be stabilized at a desired level for said flotation.

12. A process according to claim 11, wherein a hardness between 7 and 70 °dH, preferably between 9 and 15 °dH is provided in said suspension.

13. A process according to any one of claims 8 to 12, wherein said weak acid is provided by carbon dioxide and wherein the amount of carbon dioxide is 0.5 to 10 kg/ton dry deinked fiber, preferably 1 to 5 kg/ton dry deinked fiber.

14. A process according to claim 1 wherein a saponifiable flotation agent is provided in said suspension for said flotation.

15. A process according to claim 1 wherein calcium carbonate is caused to dissolve to provide an amount of calcium ions which is sufficient to saponify at least part of said flotation agent.

16. A process according to claim 1 wherein solid calcium carbonate is added into said suspension.

17. A process according to claim 1 wherein solid calcium carbonate is derived from recovered paper.

18. A process according to claim 4 wherein said carbon dioxide is introduced into said suspension during said flotation.

19. A process according to claim 4 wherein said deinking process comprises more than one loop and carbon dioxide is introduced into a loop downstream of the first loop of said process.

20. A process according to claim 1 or 5 wherein said weak acid is provided in a pulp upstream of said flotation.

21. A process according to claim 1 or 5 wherein said weak acid is provided in the pulp or in a washing or dilution liquid used for the pulp downstream of said flotation, and an aqueous fluid derived from said washing or dilution liquid or from said pulp is fed upstream to said pulp suspension for said flotation.

22. A process according to claim 21 wherein said weak acid is generated by introducing carbon dioxide into said pulp or said washing or dilution liquid.

23. A process according to claim 21 or 22 wherein said carbon dioxide is introduced into a filtrate.

24. A process according to any one of the preceding claims, wherein deinked pulp which has been subjected to said flotation is processed into paper or board.

25. Use of an acid for dissolving calcium carbonate and for stabilizing the hardness in a flotation process for the deinking of an aqueous pulp suspension containing said recycled fibers, printing ink and calcium carbonate.

26. Use according to claim 25, wherein said acid is a weak acid which is generated by carbon dioxide.

## Patentansprüche

1. Verfahren zum Deinken von rezyklierten Fasern, bei dem man:
- eine wässrige Halbstoffsuspension, die rezyklierte Fasern, Druckfarbe und Calciumcarbonat enthält, bereitstellt;
- die Härte der Halbstoffsuspension stabilisiert, indem man die Auflösung von in der Suspension enthaltenem Calciumcarbonat durch Bereitstellen einer schwachen Säure in der Suspension bewirkt;
- die erhaltene Halbstoffsuspension einer Flotation unterwirft, wodurch die Druckfarbe von der Suspension getrennt wird;
- wobei die schwache Säure in einer Menge bereitgestellt wird, die dazu ausreicht, eine Stabilisierung des pH-Werts und der Härte bei einem für die Flotation gewünschten Niveau zu bewirken;
- wobei die schwache Säure in einer Menge bereitgestellt wird, die dazu ausreicht, den pH-Wert der Suspension nach der Bereitstellung der schwachen Säure auf etwa pH 6 bis 8, vorzugsweise etwa pH 6,9 bis 7,5, einzustellen;
- wobei der pH-Wert so stabilisiert wird, dass bei der Flotation eine pH-Wert-Fluktuation von höchstens ± 0,15 pH-Einheiten, vorzugsweise höchstens ± 0,05 pH-Einheiten, auftritt;
- wobei die Härte so stabilisiert wird, dass bei der Flotation eine Härtefluktuation von höchstens ± 1 °dH-Einheit, vorzugsweise höchstens ± 0,5 °dH-Einheiten, auftritt.

2. Verfahren nach Anspruch 1, bei dem die schwache Säure aus Kohlensäure, Phosphorsäure, Phosphonsäure, Metaphosphorsäure, Essigsäure, Citronensäure, Ameisensäure und dissoziierten Formen dieser Säuren ausgewählt wird.

3. Verfahren nach Anspruch 1, bei dem die schwache Säure durch Zugeben einer schwachen Säure zu der Halbstoffsuspension bereitgestellt wird.

4. Verfahren nach Anspruch 1 oder 2, bei dem die schwache Säure durch Eintragen von Kohlendioxid in die Suspension zur Bildung von Kohlensäure darin erzeugt wird.

5. Verfahren nach Anspruch 1, bei dem die schwache Säure zunächst in einem wässrigen Fluid bereitgestellt wird, welches anschließend zu der Suspension gegeben wird.

6. Verfahren nach Anspruch 1 oder 2, bei dem die schwache Säure in einer Menge bereitgestellt wird, die dazu ausreicht, den pH-Wert der Halbstoffsuspension zu verringern.

7. Verfahren nach Anspruch 6, bei dem der pH-Wert der Suspension durch die schwache Säure um mindestens 0,1 pH-Einheiten, vorzugsweise 0,2 pH-Einheiten oder mehr, verringert wird.

8. Verfahren nach Anspruch 1, bei dem die schwache Säure dazu befähigt ist, in der Suspension einen Puffer zu bilden.

9. Verfahren nach Anspruch 8, bei dem die schwache Säure in einer Menge bereitgestellt wird, die dazu ausreicht, einen die Suspension bei einem für die Flotation gewünschten pH-Wert-Niveau stabilisierenden Puffer bereitzustellen.

10. Verfahren nach Anspruch 1 oder 2, bei dem die schwache Säure in einer Menge bereitgestellt wird, die dazu ausreicht, eine Erhöhung der Härte durch eine erhöhte Menge von Calciumionen in der Halbstoffsuspension zu bewirken.

11. Verfahren nach Anspruch 1 oder 2, wobei die schwache Säure in einer Menge bereitgestellt wird, die dazu ausreicht, eine Stabilisierung der Härte bei einem für die Flotation gewünschten Niveau zu bewirken.

12. Verfahren nach Anspruch 11, bei dem in der Suspension eine Härte zwischen 7 und 70 °dH, vorzugsweise zwischen 9 und 15 °dH, bereitgestellt wird.

13. Verfahren nach einem der Ansprüche 8 bis 12, bei dem die schwache Säure durch Kohlendioxid bereitgestellt wird und die Kohlendioxidmenge 0,5 bis 10 kg/Tonne trockene deinkte Faser, vorzugsweise 1 bis 5 kg/Tonne trockene deinkte Faser, beträgt.

14. Verfahren nach Anspruch 1, bei dem in der Suspension ein verseifbares Flotationsmittel für die Flotation bereitgestellt wird.

15. Verfahren nach Anspruch 1, bei dem die Auflösung von Calciumcarbonat bewirkt wird, um eine Menge von Calciumionen bereitzustellen, die zur Verseifung mindestens eines Teils des Flotationsmittels ausreicht.

16. Verfahren nach Anspruch 1, bei dem festes Calciumcarbonat in die Suspension gegeben wird.

17. Verfahren nach Anspruch 1, bei dem festes Calciumcarbonat aus zurückgewonnenem Papier gewonnen wird.

18. Verfahren nach Anspruch 4, bei dem das Kohlendioxid während der Flotation in die Suspension eingetragen wird.

19. Verfahren nach Anspruch 4, bei dem das Deinking-Verfahren mehr als eine Schleife umfasst und Kohlendioxid in eine stromabwärts der ersten Schleife des Verfahrens gelegene Schleife eingetragen wird.

20. Verfahren nach Anspruch 1 oder 5, bei dem die schwache Säure in einem stromaufwärts der Flotation gelegenen Halbstoff bereitgestellt wird.

21. Verfahren nach Anspruch 1 oder 5, bei dem die schwache Säure in dem Halbstoff oder in einer Wasch- oder Verdünnungsflüssigkeit, die stromabwärts der Flotation für den Halbstoff verwendet wird, bereitgestellt wird und ein aus der Wasch- oder Verdünnungsflüssigkeit oder aus dem Halbstoff gewonnenes wässriges Fluid der Halbstoffsuspension stromaufwärts für die Flotation zugeführt wird.

22. Verfahren nach Anspruch 21, bei dem die schwache Säure durch Eintragen von Kohlendioxid in den Halbstoff oder die Wasch- oder Verdünnungsflüssigkeit erzeugt wird.

23. Verfahren nach Anspruch 21 oder 22, bei dem das Kohlendioxid in ein Filtrat eingetragen wird.

24. Verfahren nach einem der vorhergehenden Ansprüche, bei dem deinkter Halbstoff, der der Flotation unterworfen worden ist, zu Papier oder Pappe verarbeitet wird.

25. Verwendung einer Säure zum Auflösen von Calciumcarbonat und zum Stabilisieren der Härte bei einem Flotationsverfahren zum Deinken einer wässrigen Halbstoffsuspension, die die rezyklierten Fasern, Druckfarbe und Calciumcarbonat enthält.

26. Verwendung nach Anspruch 25, bei dem es sich bei der Säure um eine schwache Säure handelt, die durch Kohlendioxid erzeugt wird.

## Revendications

1. Procédé de désencrage de fibres recyclées, comprenant :
- la fourniture d'une suspension aqueuse de pâte contenant des fibres recyclées, de l'encre d'imprimerie et du carbonate de calcium ;
- la stabilisation de la dureté de ladite suspension de pâte en causant la dissolution du carbonate de calcium présent dans ladite suspension par apport d'un acide faible dans ladite suspension ;
- le fait de soumettre la suspension de pâte ainsi obtenue à une flottaison pour séparer ladite encre d'imprimerie de ladite suspension ;
- dans lequel ledit acide faible est apporté en quantité suffisante pour produire une stabilisation du pH et de la dureté à un niveau désiré pour ladite flottaison ;
- dans lequel ledit acide faible est apporté en quantité suffisante pour avoir comme effet que le pH de ladite suspension, après ladite introduction dudit acide faible, est d'environ 6 à 8 points de pH, préférablement d'environ 6,9 à 7,5 points de pH ;
- dans lequel ledit pH est stabilisé de façon à produire une fluctuation du pH dans ladite flottaison ne dépassant pas ± 0,15 point de pH, préférablement ne dépassant pas ± 0,05 point de pH ;
- dans lequel ladite dureté est stabilisée de façon à produire une fluctuation de la dureté dans ladite flottaison ne dépassant pas ± 1 °dH, préférablement ne dépassant pas ± 0,5 °dH.

2. Procédé selon la revendication 1, dans lequel ledit acide faible est sélectionné parmi l'acide carbonique, l'acide phosphorique, l'acide phosphoreux, l'acide métaphosphorique, l'acide acétique, l'acide citrique, l'acide formique et des formes dissociées de ces acides.

3. Procédé selon la revendication 1, dans lequel ledit acide faible est apporté par addition d'un acide faible dans ladite suspension de pâte.

4. Procédé selon la revendication 1 ou 2, dans lequel ledit acide faible est généré par introduction de dioxyde de carbone dans ladite suspension pour former de l'acide carbonique dans celle-ci.

5. Procédé selon la revendication 1, dans lequel ledit acide faible est apporté initialement dans un fluide aqueux, qui est ensuite ajouté à ladite suspension.

6. Procédé selon la revendication 1 ou 2, dans lequel ledit acide faible est apporté en quantité suffisante pour réduire le pH de ladite suspension de pâte.

7. Procédé selon la revendication 6, dans lequel le pH de ladite suspension est réduit d'au moins 0,1 point de pH, préférablement de 0,2 point de pH ou plus par ledit acide faible.

8. Procédé selon la revendication 1, dans lequel ledit acide faible est capable de former un tampon dans ladite suspension.

9. Procédé selon la revendication 8, dans lequel ledit acide faible est apporté en quantité suffisante pour produire un tampon stabilisant la suspension à un niveau souhaité de pH pour ladite flottaison.

10. Procédé selon la revendication 1 ou 2, dans lequel ledit acide faible est apporté en quantité suffisante pour avoir comme effet que la dureté est augmentée par une augmentation de la quantité d'ions calcium dans ladite suspension de pâte.

11. Procédé selon la revendication 1 ou 2, dans lequel ledit acide faible est apporté en quantité suffisante pour avoir comme effet que la dureté est stabilisée à un niveau souhaité pour ladite flottaison.

12. Procédé selon la revendication 11, dans lequel une dureté de 7 à 70 °dH, préférablement de 9 à 15 °dH, est produite dans ladite suspension.

13. Procédé selon l'une quelconque des revendications 8 à 12, dans lequel ledit acide faible est produit par du dioxyde de carbone et dans lequel la quantité de dioxyde de carbone est de 0,5 à 10 kg/tonne de fibres désencrées sèches, préférablement de 1 à 5 kg/tonne de fibres désencrées sèches.

14. Procédé selon la revendication 1, dans lequel un agent de flottaison saponifiable est introduit dans ladite suspension pour ladite flottaison.

15. Procédé selon la revendication 1, dans lequel on fait dissoudre du carbonate de calcium pour apporter une quantité d'ions calcium qui est suffisante pour saponifier au moins une partie dudit agent de flottaison.

16. Procédé selon la revendication 1, dans lequel du carbonate de calcium solide est ajouté dans ladite suspension.

17. Procédé selon la revendication 1, dans lequel le carbonate de calcium solide est dérivé de papier recyclé.

18. Procédé selon la revendication 4, dans lequel ledit dioxyde de carbone est introduit dans ladite suspension pendant ladite flottaison.

19. Procédé selon la revendication 4, dans lequel ledit procédé de désencrage comporte plus d'une boucle et le dioxyde de carbone est introduit dans une boucle en aval de la première boucle dudit procédé.

20. Procédé selon la revendication 1 ou 5, dans lequel ledit acide faible est apporté dans une pâte en amont de ladite flottaison.

21. Procédé selon la revendication 1 ou 5, dans lequel ledit acide faible est apporté dans la pâte ou dans un liquide de lavage ou de dilution utilisé pour la pâte en aval de ladite flottaison, et un fluide aqueux dérivé dudit liquide de lavage ou de dilution ou de ladite pâte est introduit en amont de ladite suspension de pâte pour ladite flottaison.

22. Procédé selon la revendication 21, dans lequel ledit acide faible est généré par introduction de dioxyde de carbone dans ladite pâte ou ledit liquide de lavage ou de dilution.

23. Procédé selon la revendication 21 ou 22, dans lequel ledit dioxyde de carbone est introduit dans un filtrat.

24. Procédé selon l'une quelconque des revendications précédentes, dans lequel la pâte désencrée qui a été soumise à ladite flottaison est transformée en papier ou en carton.

25. Utilisation d'un acide pour dissoudre du carbonate de calcium et pour stabiliser la dureté dans un procédé de flottaison pour le désencrage d'une suspension aqueuse de pâte contenant lesdites fibres recyclées, de l'encre d'imprimerie et du carbonate de calcium.

26. Utilisation selon la revendication 25, dans laquelle ledit acide est un acide faible qui est généré par du dioxyde de carbone.
